# EUROPEAN PATENT SPECIFICATION

(11) **EP 2 335 923 B1**
(45) Date of publication and mention of the grant of the patent: **30.03.2016**
(21) Application number: 09816069.0
(22) Date of filing: 14.09.2009
(51) Int. Cl.: B32B 27/36, B29C 49/22, B65D 65/40, B32B 27/18, B32B 27/34, B32B 27/08

(54) **LIGHTWEIGHT MULTILAYERED POLYESTER CONTAINER**
LEICHTGEWICHTIGER MEHRSCHICHTIGER POLYESTERBEHÄLTER
RÉCIPIENT LÉGER EN POLYESTER MULTICOUCHE

(30) Priority: 29.09.2008 JP 2008251068
(43) Date of publication of application: 22.06.2011
(73) Proprietor: Toyo Seikan Kaisha, Ltd., Shinagawa-ku Tokyo 141-8640 (JP)
(72) Inventor: YOSHIKAWA, Masayuki, Yokohama-shi Kanagawa 230-0001 (JP); NAKATANI, Toyohiko, Yokohama-shi Kanagawa 230-0001 (JP); TAJIMA, Tomonari, Yokohama-shi Kanagawa 230-0001 (JP)
(74) Representative: Müller-Boré & Partner Patentanwälte PartG mbB
(86) International application number: PCT/JP2009/066032
(87) International publication number: WO 2010/035654

(56) References cited:
- EP-A1- 2 420 457
- JP-A- 2004 182 344
- JP-A- 2005 067 637
- JP-A- 2007 099 360
- US-A1- 2003 068 455
- US-A1- 2006 286 366
- DATABASE WPI Week 200744 Thomson Scientific, London, GB; AN 2007-452074 XP002676895, & JP 2007 099360 A (TOYO SEIKAN KAISHA LTD) 19 April 2007 (2007-04-19)

## Description

### Technical Field:

This invention relates to a multilayer polyester container having an intermediate layer of a barrier resin. More specifically, the invention relates to a light multilayer polyester container which maintains excellent barrier property despite of a decreased thickness of container wall and effectively prevents interlayer peeling and deformation at the time of opening the cap.

### Background Art:

In order to decrease the material cost of plastic packing containers, attempts have been made to reduce the weight by decreasing the thickness of the container walls. To compensate for a decreased preservability of the contents stemming from the decreased thickness of container walls or to further improve the preservability, attempts have heretofore been made to realize the container wall in a multilayer structure using, as the inner and outer layers, a polyester resin and using, as the intermediate layer, an ethylene/vinyl alcohol copolymer or a xylylene group-containing polyamide resin for improving gas-barrier property, or a functional resin such as cyclic olefin copolymer for improving barrier property against the water vapor (water component)(patent document 1, etc.).

In order to further improve the functions such as gas-barrier property, etc., the following patent documents 2 and 3 disclose blending a xylylene group-containing polyamide with a clay.

### Prior Art Documents:

### Patent Documents:

Patent document 1: JP-A-2005-067637
Patent document 2: JP-A-2004-142444
Patent document 3: JP-A-2008-254774

### Outline of the Invention:

### Problems that the Invention is to Solve:

Nowadays, even the polyester containers having the above constitutions are facing a requirement for further decreasing the thickness and weight in order to decrease the material cost or to decrease the burden upon the environment. However, it was discovered that when it is attempted to further decrease the thickness and to decrease the weight of the multilayer polyester containers obtained by blending the above-mentioned functional resins with an inorganic filler such as clay, problems arouse as described below.

That is, addition of the inorganic filler such as clay lowers the interlayer adhesion permitting the layers to be peeled off when subjected to the shocks in a vendor. Further, when a content that spontaneously produces pressure is contained, the container deforms due to a sharp change in the internal pressure at the time of opening the cap.

It is, therefore, an object of the present invention to provide a multilayer polyester container having, as an intermediate layer, a layer obtained by blending a barrier resin with a clay, which is free from the above-mentioned problems even when the thickness is decreased to reduce the weight.

### Means for Solving the Problems:

According to the present invention, there is provided a multilayer polyester container having a multilayer structure comprising inner and outer layers of a polyester resin and at least one intermediate layer of a functional resin, wherein the intermediate layer comprises a barrier resin, a polyester resin and a clay, the clay being contained in the barrier resin, and the barrier resin and the polyester resin being contained at a weight ratio of 2.5:7.5 to 5:5, preferably, 3:7 to 5:5 and, more preferably, 3:7 to 4:6, and the intermediate layer, further, constitutes an sea-island dispersion structure in which a dispersion phase of the clay-containing barrier resin is formed in a continuous phase of the polyester resin.

In the multilayer polyester container of the present invention, it is desired that:
1. The container body wall has a thickness of less than 0.36 mm;
2. The barrier resin is a polymetaxylyleneadipamide (MXD6);
3. The intermediate layer has a thickness of 10 to 30% of the whole thickness of the container body wall; and
4. The multilayer polyester container is a pressure-resistant container obtained by the biaxial stretch-blow molding.

### Effects of the Invention:

Despite of decreasing the thickness of the container body wall down to less than 0.36 mm, the multilayer polyester container of the invention effectively prevents interlayer peeling that is triggered by a shock or deformation at the time of opening the cap caused by a sharp change in the internal pressure of when a content that spontaneously produces pressure, such as carbonated beverage, is contained. Therefore, the multilayer polyester container of the invention can be effectively used, particularly, as a pressure-resistant container.

Besides, the barrier resin and the clay used as the intermediate layer express barrier property so excellently that it is allowed to obtain such excellent gas-barrier property as oxygen permeability of not larger than 0.030 cc/pkg/day and a carbonic acid permeability of not larger than 6.0 cc/pkg/day even when the thickness of the container body wall is decreased down to less than 0.36 mm.

Further, the multilayer polyester container of the invention permits the thickness of the container body wall to be decreased down to less than 0.36 mm and, particularly, to lie in a range of 0.20 to 0. 30 mm, making it possible to decrease the material cost and to reduce burden on the environment.

### Brief Description of the Drawings:

[Fig. 1] is a view illustrating a sectional structure of a multilayer polyester container of the present invention.
[Fig. 2] is a view illustrating a sectional structure of a multilayer polyester container of the present invention.
[Fig. 3] is a side view of the multilayer polyester container of the present invention.

### Best Mode for Carrying Out the Invention:

According to the multilayer polyester container of the present invention, an important feature resides in that the intermediate layer comprises a barrier resin, a polyester resin and a clay, the barrier resin and the polyester resin are contained at a weight ratio of 2.5:7.5 to 5:5, preferably, 3:7 to 5:5 and, more preferably, 3:7 to 4:6, and the intermediate layer, further, constitutes an sea-island dispersion structure in which a dispersion phase of the barrier resin is formed in a continuous phase of the polyester resin.

When a multilayer polyester container comprising inner and outer layers of a polyester resin and an intermediate layer of a resin composition obtained by blending a barrier resin with a clay, is filled with a content which spontaneously produces pressure as described above, the layers are often peeled off due to shocks and the container often swells to a large degree when preserved and is deformed due to a reduced pressure when the cap is opened. Upon containing the barrier resin and the polyester resin at a weight ratio of 2.5:7.5 to 5:5 in the intermediate layer, however, it is made possible to effectively prevent the above-mentioned problems.

That is, upon blending the intermediate layer with the polyester resin, adhesion is improved among the inner layer, outer layer and intermediate layer and, as a result, interlayer peeling can be effectively prevented. Upon blending the intermediate layer with the polyester, however, it can be considered that barrier property decreases. According to the present invention, however, the polyester resin is blended in an amount in the above-mentioned range, and an sea-island dispersion structure is formed in which a dispersion phase of the barrier resin is formed in a continuous phase of the polyester resin to effectively shut off the permeating gas relying on a detouring effect aided by the presence of the clay. Therefore, the barrier property can be effectively expressed despite of decreasing the thickness of the container body wall.

The above actions and effects of the invention will become obvious from the results of Examples appearing later.

That is, a container comprising a single polyester resin layer and having a thickness that is decreased down to less than 0.36 mm in the container body wall has poor barrier property (Comparative Example 1). Containers having a multilayer structure including an intermediate layer which is a barrier layer and having a thickness that is decreased down to less than 0.36 mm in the container body wall fail to effectively attain barrier property if the blended amount of the polyester resin in the intermediate layer is larger than the above-mentioned range (Comparative Examples 4 and 5) while containers in which the polyester resin is not blended in the intermediate layer or is blended in amounts smaller than the above-mentioned range, permit the occurrence of interlayer peeling and deformation at the time of opening the cap (Comparative Examples 2 and 3).

On the other hand, when the intermediate layer is blended with the polyester resin in an amount in the above-mentioned range, excellent barrier property is exhibited despite the thickness of the container body wall is decreased down to less than 0.36 mm without permitting the occurrence of interlayer peeling or deformation at the time of opening the cap.

### (Examples 1 to 9)

### (Inner and outer layers)

As the polyester resin used for the inner and outer layers of the invention, there can be used a known polyester resin comprising a dicarboxylic acid component and a diol component.

As the dicarboxylic acid component, it is desired that not less than 50% and, particularly, not less than 80% of the dicarboxylic acid component is terephthalic acid from the standpoint of mechanical properties and thermal properties. However, carboxylic acid components other than terephthalic acid may be contained, as a matter of course. As the carboxylic acid components other than terephthalic acid, there can be exemplified isophthalic acid, naphthalenedicarboxylic acid, p-*β*-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol component, it is desired that not less than 50% and, particularly, not less than 80% of the diol component is ethylene glycol from the standpoint of mechanical properties and thermal properties. As the diol component other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the above dicarboxylic acid component and the diol component may contain trifunctional or more highly functional polybasic acid and polyhydric alcohol; i.e., polybasic acids such as trimellitic acid, pyromellitic acid, hemimellitic acid, 1,1,2,2-ethanetetracarboylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the polyester resin used for the inner and outer layers of the invention has an intrinsic viscosity in a range of 0.60 to 1.40 dL/g as measured at 30°C by using a phenol/tetrachloroethane mixed solvent at a weight ratio of 1:1. It is, further, desired that the polyester resin has a melting point (Tm) of 200 to 275°C to improve the heat resistance and workability of the multilayer container. It is, further, desired that the polyester resin has a glass transition point of not lower than 30°C and, particularly, in a range of 50 to 120°C.

The polyester resin used for the inner and outer layers of the invention can be blended with known blending agents for resins, such as coloring agent, antioxidizing agent, stabilizer, various antistatic agents, parting agent, lubricant and nucleating agent in a range in which they do not impair the quality of the finally molded article according to a known recipe.

### (Intermediate layer)

The intermediate layer of the multilayer polyester container of the invention comprises a resin composition (hereinafter often referred to as "clay-containing barrier resin composition") of a polyester resin, a barrier resin and a clay, the resin composition containing the barrier resin and the polyester resin at a weight ratio of 2.5:7.5 to 5:5, preferably, 3:7 to 5:5 and, more preferably, 3:7 to 4:6 and, further, constituting an sea-island dispersion structure in which a dispersion phase of the barrier resin is formed in a continuous phase of the polyester resin.

In the above sea-island dispersion structure of the present invention, it is desired that the dispersion phase of the barrier resin has a domain size of 1 to 40 *µ*m and, preferably, 1 to 20 *µ*m.

As the barrier resin used in the invention, there can be used a known barrier resin having gas-barrier property, water vapor-barrier property or oxygen-absorbing property. Concrete examples include a xylylene group-containing polyamide resin such as polymetaxylyleneadipamide or polymetaxylylenesebacamide which are gas-barrier resins, ethylene/vinyl alcohol copolymer, and cyclic olefin resin which is a water vapor-barrier resin. The invention exhibits markedly excellent action and effect particularly when the polymetaxylyleneadipamide (MXD6) having excellent gas-barrier property is used.

As the polyester resin, there can be used those exemplified as polyester resins for use as the inner and outer layers. In particular, it is desired to use the same resin as the resin used for the inner and outer layers from the standpoint of improving adhesion among the layers.

As the clay, there can be used mica, vermiculite and smectite and, preferably, lamellar silicate of the 2-octaheral type or the 3-octahedral type having a charge density of 0.25 to 0.6. As the ones of the 2-octahedral type, there can be exemplified montmorillonite, beidellite and nontronite. As the ones of the 3-octahedral type, there can be exemplified hectorite and suponite.

The clay used in the invention is, particularly desirably, the clay that is treated to be swollen with an organic property-imparting agent. Among the clays, in this case, the montmorillonite has highly swelling property, and the swelling spreads among the layers due to the infiltration of the organic property-imparting agent.

As the organic property-imparting agent, a quaternary ammonium salt can be preferably used. More preferably, there can be used a quaternary ammonium salt having at least one or more alkyl groups with not less than 12 carbon atoms, such as trimethyldodecyl ammonium salt and trimethyltetradecyl ammonium salt.

In the present invention, it is desired that the barrier resin is blended with the clay at a ratio of 1 to 10 parts by weight and, particularly, 1 to 8 parts by weight per 100 parts by weight of the barrier resin. If the amount of clay is smaller than the above range, the gas-barrier property cannot be sufficiently obtained by the addition of the clay as compared to when the clay is added in an amount in the above range. If the amount of clay is larger than the above range, on the other hand, the moldability becomes poorer than when the clay is added in an amount in the above range and, besides, the container exhibits pearl-like appearance which is not desirable when importance is placed on the transparency of the container.

Further, the clay-containing barrier resin composition may be blended with an oxidizing organic component and a transition metal catalyst in combination to impart oxygen-absorbing property thereto.

As the oxidizing organic component, there can be exemplified those having a functional group on a side chain or at a terminal and that can be oxidized. Concretely, there can be exemplified a polyene oligomer or a polymer modified with an acid or an acid anhydride, such as butadiene and butadiene modified with anhydrous maleic acid. As the transition metal catalyst, there can be used metal components of the Group VIII of periodic table, such as iron, cobalt and nickel to which only, however, the invention is in no way limited.

It is desired that the oxidizing organic component is blended in an amount of 2 to 10 parts by weight per 100 parts by weight of the barrier resin and that the transition metal catalyst is blended in an amount of at least 300 ppm calculated as metal.

In the intermediate layer of the present invention, the clay-containing barrier resin composition can be blended with the above-mentioned oxidizing component and the transition metal catalyst in combination, or with known resin blending agents such as disoxidant, filler, coloring agent, heat stabilizer, aging stabilizer, antioxidant, anti-aging agent, photo stabilizer, ultraviolet ray absorber, antistatic agent, lubricant such as metal soap or wax, and reforming resin or rubber in a range in which they do not impair the object of the invention according to known recipe.

### (Multilayer structure)

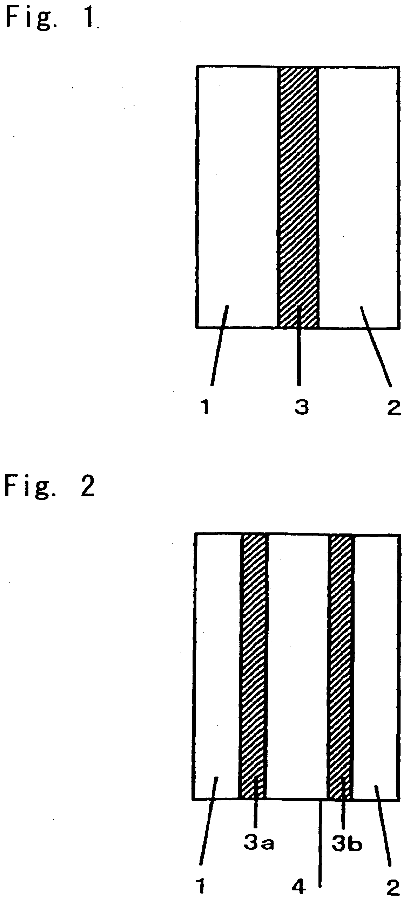

The multilayer polyester container of the invention can employ various layer constitutions so far as it includes inner and outer layers of a polyester resin and at least one intermediate layer of a clay-containing barrier resin composition. The layer constitution may have the intermediate layer 3 of the clay-containing barrier resin composition between the inner layer 1 and the outer layer 2 of the polyester resin as shown in Fig. 1. Or, as shown in Fig. 2, the layer constitution may include the inner layer 1 and the outer layer 2 of the polyester resin, and two intermediate layers 3a and 3b of the clay-containing barrier resin composition interposed between the inner layer 1 of the polyester resin and an intermediate layer 4 of the polyester resin, and between the outer layer 2 of the polyester resin and the intermediate layer 4 of the polyester resin.

According to the present invention, improved interlayer adhesion has been attained among the inner layer, outer layer and intermediate layer. In producing a multilayer container, therefore, though not necessary, an adhesive resin may be interposed among the resin layers.

As the adhesive resin, there can be exemplified a thermoplastic resin that contains carbonyl (-CO-) groups based on carboxylic acid, carboxylic acid anhydride, carboxylate, carboxylic acid amide or carboxylic acid ester on a main chain or on a side chain at a concentration of 1 to 700 milliequivalents (meq)/100 g of the resin and, particularly, 10 to 500 meq/100 g of the resin. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer and copolymerized polyester.

In the multilayer polyester container of the present invention, it is desired that the body wall has a thickness that is decreased down to be less than 0.36 mm and, particularly, to lie in a range of 0.20 to 0.30 mm though it may vary depending upon the volume (weight) of the container and the use of the container.

Here, the thickness of the body wall specified in the invention is the one as measured over the thinnest portion of the container body wall.

It is desired that the thickness of the intermediate layer is in a range of 10 to 30% and, particularly, 20 to 25% of the whole thickness of the container body wall. The intermediate layer which is thicker than the above range is not desirable from the standpoint of economy, moldability and transparency of the container. The intermediate layer which is thinner than the above range, on the other hand, makes it difficult to impart barrier property to a sufficient degree.

As described above, further, when the intermediate layers comprising the clay-containing barrier resin composition are made present in a plural number, it is desired that the thickness of the whole intermediate layers is in a range of 10 to 30% of the whole thickness of the body wall.

### (Process for production)

The multilayer polyester container of the present invention effectively prevents interlayer peeling and deformation at the time when the cap is opened even if it is filled with a carbonated beverage or the like beverage that spontaneously produces pressure, and can, therefore, be preferably used particularly as a pressure-resistant polyester container. Described below is a process for producing a pressure-resistant biaxially stretch-blow-molded container that can be most suitably utilized as the multilayer polyester container of the invention.

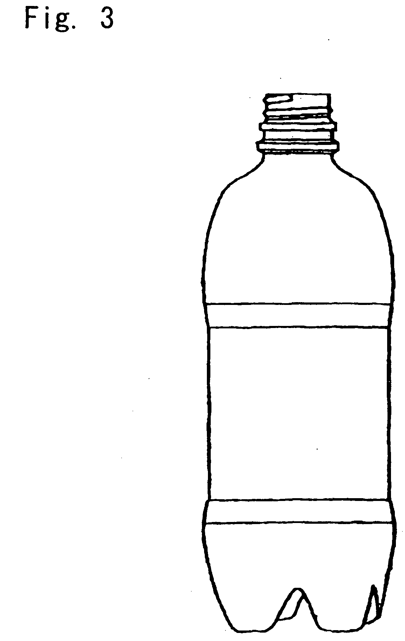

Namely, a preform having the above-mentioned multilayer structure is molded, is heated at a high temperature of 110 to 120°C, is stretch-drawn in the axial direction and, at the same time, is blow-stretched in the circumferential direction to mold the known pressure-resistant bottom portion in a so-called petaloid shape as shown in Fig. 3 or champaign shape in which a recessed portion is formed at the center of the bottom to thereby produce a pressure-resistant polyester container.

In the present invention, it is desired to produce a master batch by blending the barrier resin with the clay in advance and pelletizing the mixture, and to use, as the resin for the intermediate layer, the clay-containing barrier resin composition obtained by blending the master batch and the polyester resin in a manner that the ratio of amounts of the polyester resin and the barrier resin becomes as described above. Therefore, the clay is made present in a dispersion phase of the barrier resin enabling the barrier resin to exhibit further improved barrier property. The above master batch and the polyester resin may be further blended with the barrier resin. In either case, it is desired that the whole resins for forming the intermediate layer contain the clay in an amount of 0.3 to 5 parts by weight.

The multilayer preform can be produced by a known molding method, such as a coextrusion-molding method which coextrudes the clay-containing barrier resin composition together with the polyester resin that constitutes the inner and outer layers; a simultaneous injection-molding method which simultaneously injects the clay-containing barrier resin composition and the polyester resin into a metal mold; a sequential injection method which sequentially injects the polyester resin, the clay-containing barrier resin composition and the polyester resin into the metal mold; and a compression-molding method which compression-molds a coextruded product of the clay-containing barrier resin composition and the polyester resin by using a core metal mold and a cavity metal mold. In order for the thickness of the intermediate layer in the container body wall to lie in the above-mentioned range relying upon the above molding methods, the amount of the clay-containing barrier resin composition should be set to be 5 to 10% by weight with respect to the amount of the multilayer preform.

When any one of these systems is employed, the preform that is molded should be in a supercooled state, i.e., in an amorphous state, and it is desired that the intermediate layer comprising the clay-containing barrier resin composition is sealed in the inner and outer layers of the thermoplastic polyester.

It is desired that molding the multilayer preform and stretch-blow-molding the multilayer preform are conducted by a cold parison system as described above. It is, however, also allowable to conduct the stretch-blow molding by a hot parison system without completely cooling the multilayer preform that is molded.

Prior to conducting the stretch-blow molding, the preform is pre-heated up to a stretching temperature by such means as hot air, infrared-ray heater or high-frequency induction heating. Here, according to the present invention, it is desired to stretch-blow the preform by heating it at a temperature higher than that of the ordinary stretch-blow molding, i.e., at 110 to 120°C. This suppresses an increase of stress caused by the elongation of the clay-containing barrier resin composition, and promotes the crystallization resulting from stretch elongation.

The heated preform is fed into a known stretch-blow-molding machine, set into a metal mold, drawn and stretched in the axial direction by pushing in a stretching rod, and is stretched in the circumferential direction by blowing a fluid. Here, it is desired to heat the interior of the multilayer preform by using a heating body heated at 300 to 600°C and/or by using the hot air of 150 to 220°C.

That is, in biaxially stretch-blow-molding the preform heated at a temperature in the above range, the interior of the preform has been heated by inserting the heating body heated at a high temperature and/or by blowing the hot air of a high temperature, whereby the temperature in the interior of the preform becomes more high and the temperature in the preform is maintained high at the time of being stretch-blow-molded, promoting the relaxation of strain thereof and relaxing the strain of the intermediate layer comprising the clay-containing barrier resin composition that produces a large stress upon elongation, effectively suppressing the loss of functions such as transparency and gas-barrier property.

It is desired that the time for internal heating varies depending upon the temperature for preheating the preform and the setpoint temperature of the heating body used for the internal heating and is, preferably, in a range of 8 to 20 seconds and, particularly, 10 to 15 seconds. It is, further, desired that the hot air used for the stretch-blow molding is blown into the preform set in the metal mold for 2 to 3 seconds.

The stretching ratios of the pressure-resistant polyester container which is the final product are, preferably, in ranges of 1.5 to 25 times as the area ratio, 1.2 to 6 times as the stretching ratio in the axial direction, and 1.2 to 4.5 times as the stretching ratio in the circumferential direction.

In the pressure-resistant polyester container obtained by the process of the present invention, the polyester resin in the container body wall has a density of not less than 1.353 g/cm³ or a crystallinity by the density method of not less than 15%, and features excellent transparency.

### EXAMPLES

By using a co-injection molding machine, multilayer preforms for pressure-resistant bottles shown in Table 3 were formed in compliance with the contents of Table 1. The layers were of the two-kind-three-layer (PET/intermediate layer/PET) constitution. To form the intermediate layers, barrier materials obtained by blending the MXD6 with the clay and the dried pellets of the PET material were dry-blended together at weight ratios shown in Table 1, thrown into the hopper of the molding machine, and were co-injection-molded. The inner and outer PET layers were formed by using the same PET material as the one used for the intermediate layer. The preform weighed 24 g, and the intermediate layer was molded at a temperature of 280 to 290°C. The molded preforms were biaxially stretch-blow-molded into 500-ml pressure-resistant bottles and were evaluated for their appearance, barrier performance and delamination characteristics.

As for the multilayer bottles of Examples 1 to 8 and Comparative Examples 2 to 5, preforms were formed having an intermediate layer extending up to the bottom portion. As for the multilayer bottle of Example 9, a preform was so formed that the intermediate layer did not reach the bottom portion.

As Control, a conventional bottle of the same shape weighing 31 g and comprising a single PET layer was similarly evaluated.

### (Materials that were used)

PET material: Isophthalic acid-copolymerized PET (isophthalic acid, 1.5 mol%; IV = 0.83 *µ*g/L)
Barrier material: Polymetaxylyleneadipamide (MXD6, 97%) + organic property-imparted clay (montmorillonite, 3%)

### (Method of evaluation, conditions)

Oxygen permeation: By using an apparatus, OXTRAN, manufactured by MOCON Co., empty bottles were measured for their oxygen permeabilities at 23°C, 50%RH under normal pressure.

Carbonic acid permeation: The bottles filled with carbonated water of 4.0 GV were introduced into a sealed chamber controlled at 23°C, 50%RH, and the concentrations of carbon dioxide in the chamber atmosphere were measured to calculate the carbon dioxide permeabilities of the bottles.

Interlayer peeling: The bottles filled with carbonated water of 4.0 GV were preserved at 30°C, 80%RH for 7 days, passed through a vendor to give shock thereto, and were confirmed for the occurrence of interlayer peeling by eyes.

Haze: The central portions of the bottle body walls were cut out (3 cm in diameter) and were measured by using a hazeometer.

Observing the sea-island structure: By using a microtome, the central portions of the bottle body walls were cut out in the direction of cross section in a thickness of 10 µm and were observed by using a polarizing microscope (magnification of 1000 times).

### (Results of evaluation)

As for the barrier property, the carbonic acid permeability has increased upon decreasing the weight of the single-PET-layer product from 31 g down to 24 g (Control and Comparative Example 1). The multilayer products having a blended intermediate layer and weighing 24 g (Examples 1 to 9, Comparative Examples 2 and 3) exhibited carbonic gas-barrier performance comparable or superior to that of the single-PET-layer product weighing 31 g (Control).

Even when the barrier material was used at a decreased ratio, the multilayer bottle of Example 9 without forming the intermediate layer in the bottom portion and having the intermediate layer of a thickness of as large as 47 *µ*m in the bottle body wall of which the thickness was decreased by the blow-molding, exhibited the barrier performance comparable to that of the multilayer bottle of Example 3 that possessed the same resin ratio in the intermediate layer but contained the barrier material at an increased ratio.

When the barrier material and the PET material in the intermediate layer were blended at ratios of 1:9 (Comparative Example 4) and 2:8 (Comparative Example 5), the barrier performances were superior to that of the single-PET-layer product of which the weight was decreased down to 24 g (Comparative Example 1) but were inferior to that of the conventional single-PET-layer product weighing 31 g (Control).

As for the interlayer peeling, the multilayer product having the intermediate layer comprising the barrier material only and weighing 24 g (Comparative Example 2) developed interlayer peeling. However, no interlayer peeling was recognized in the multilayer products having the intermediate layer comprising the barrier material and the PET material blended at a ratio of 2.5:7.5 to 5:5 (Examples 1 to 9). The multilayer product having the blending ratio of 6:4 (Comparative Example 3), however, developed interlayer peeling.

As for the appearance of the bottles, the bottles having the intermediate layers comprising the barrier material and the PET material blended at ratios of 5:5 (Example 7) and 6:4 (Comparative Example 3) exhibited hazes (cloudiness) in the bottle body walls that were conspicuously different from those of the bottles having the blending ratios of 2.5:7.5 (Example 8), 3:7 (Examples 1 and 9) and 4: 6 (Examples 2 to 6). This was due to the sea-island structures (domain sizes, distribution) of the blended intermediate layers (Table 2).

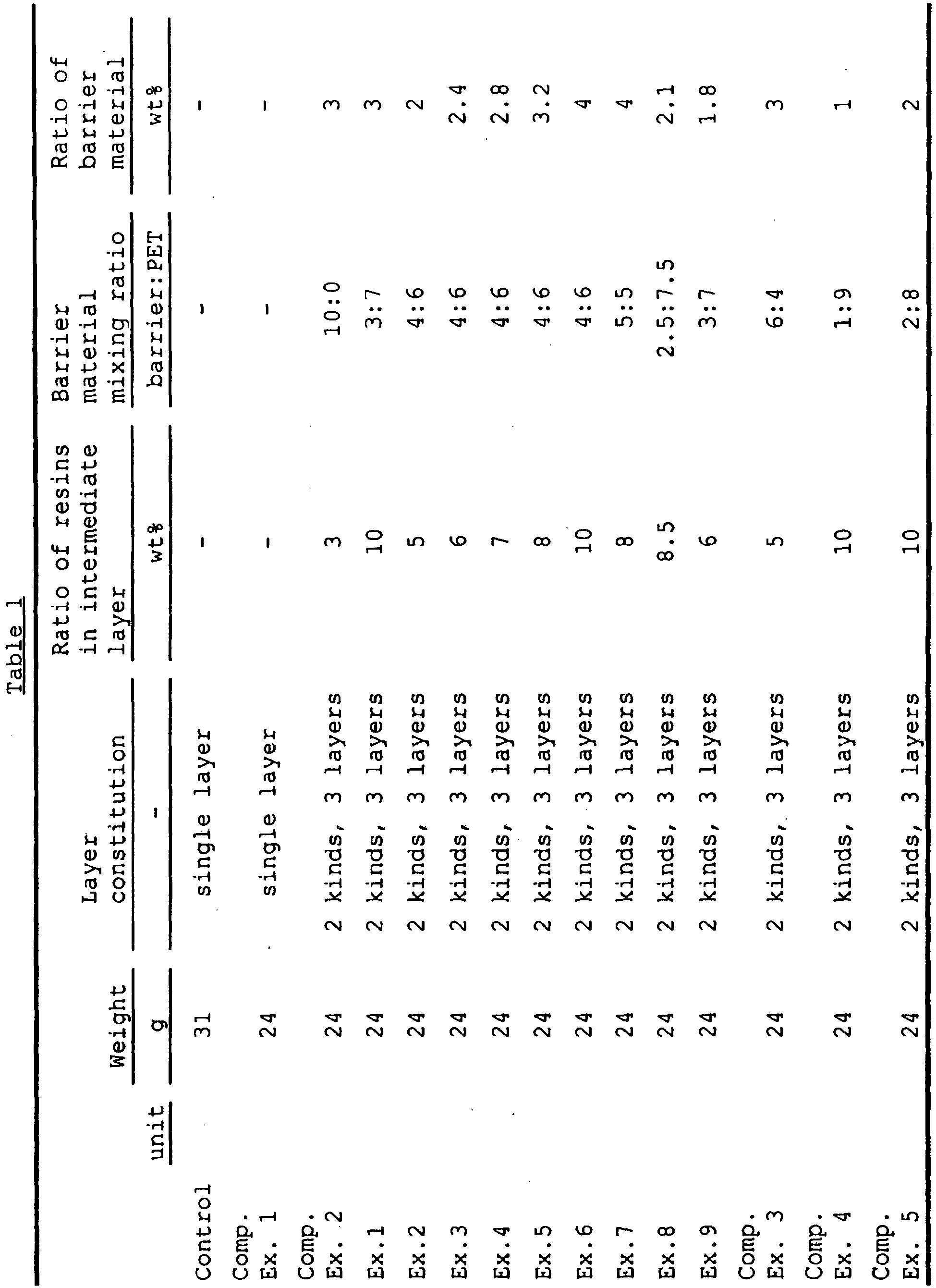

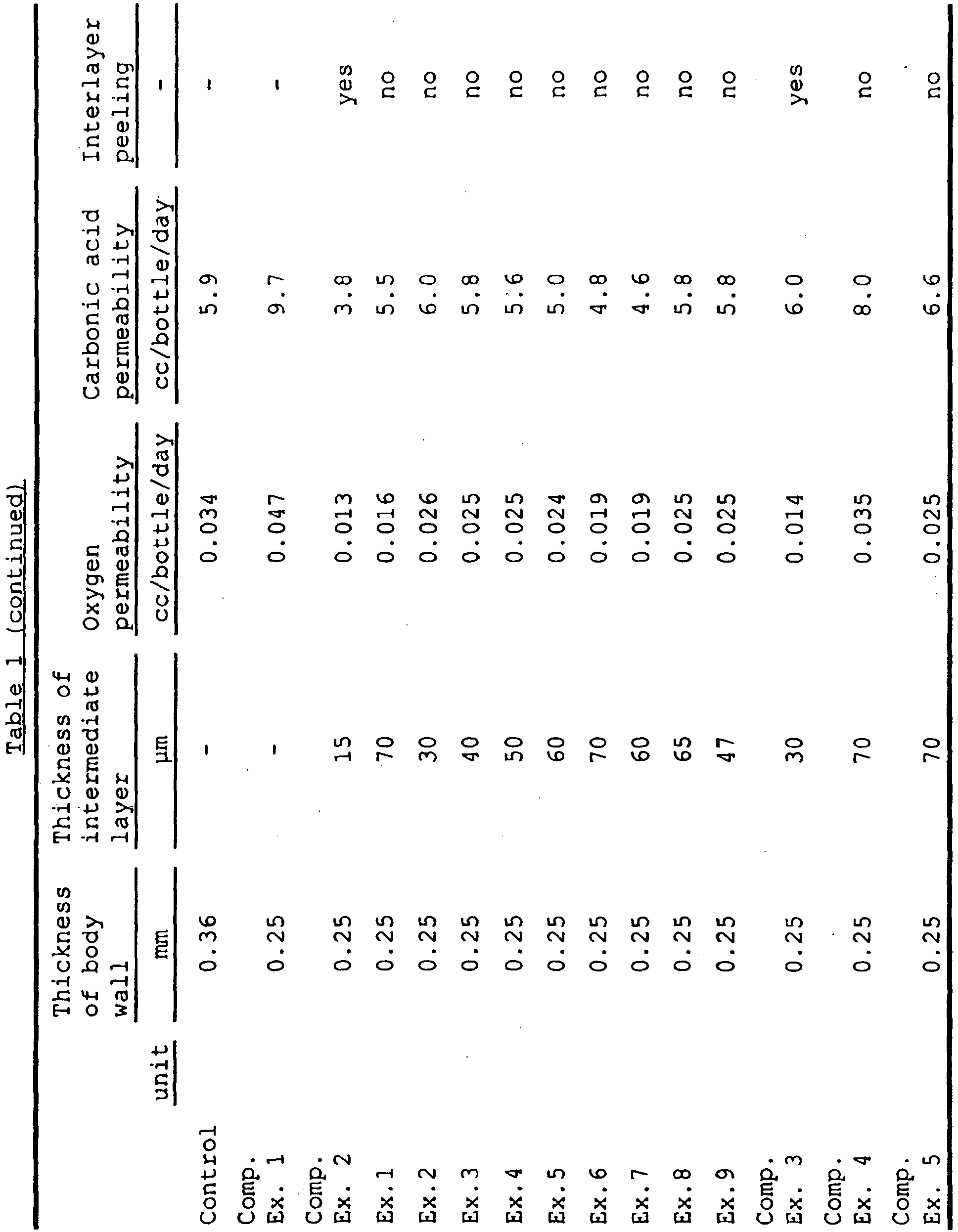

**Table 2**

| | Haze in the body wall | Island/sea | Domain size |
|---|---|---|---|
| unit | % | - | Mm |
| Control | 2.0 | - | - |
| Comp. Ex. 1 | 2.0 | - | - |
| Comp. Ex. 2 | 2.7 | - | - |
| Ex. 1 | 10.6 | barrier/PET | 1-10 |
| Ex.2 | 4.7 | barrier/PET | 10 -20 |
| Ex.3 | 5.4 | barrier/PET | 10 -20 |
| Ex.4 | 8.2 | barrier/PET | 10 - 20 |
| Ex.5 | 8.9 | barrier/PET | 10 -20 |
| Ex.6 | 9.6 | barrier/PET | 10 -20 |
| Ex.7 | 26.1 | barrier/PET | 20 -40 |
| Ex.8 | 10.8 | barrier/PET | 1 - 10 |
| Ex. 9 | 6.0 | barrier/PET | 1 - 10 |
| Comp. Ex. 3 | 31.7 | PET/barrier | - |
| Comp. Ex. 4 | 4.0 | barrier/PET | 1-10 |
| Comp. Ex. 5 | 7.3 | barrier/PET | 1-10 |

### Industrial Applicability:

Even when filled with a carbonated beverage or the like that spontaneously produces pressure, the multilayer polyester container of the present invention effectively prevents the interlayer peeling or deformation of when the cap is opened, and can be particularly preferably used as a pressure-resistant polyester container. The multilayer polyester container of the invention can be, further, preferably used as a container for aseptic filling in addition to being used as the pressure-resistant polyester container.

The pressure-resistant polyester container of the present invention can be particularly preferably used for containing a content that spontaneously produces pressure, such as beer, carbonated soft drinks, carbonated beverage containing juice and the like to mention the beverages, to which only, however, the pressure-resistant polyester container of the invention is in no way limited.

## Claims

1. A multilayer polyester container having a multilayer structure comprising inner and outer layers of a polyester resin and at least one intermediate layer of a barrier resin, wherein:
said intermediate layer comprises a barrier resin, a polyester resin and a clay, the clay being contained in the barrier resin, and said barrier resin and said polyester resin being contained at a weight ratio of 2.5:7.5 to 5:5, and said intermediate layer, further, constitutes an sea-island dispersion structure in which a dispersion phase of the clay-containing barrier resin is formed in a continuous phase of the polyester resin.

2. The multilayer polyester container according to claim 1, wherein said barrier resin and said polyester resin are contained at a weight ratio of 3:7 to 5:5.

3. The multilayer polyester container according to claim 1, wherein the container body wall has a thickness of less than 0.36 mm.

4. The multilayer polyester container according to claim 1, wherein said barrier resin is a polymetaxylyleneadipamide(MXD6).

5. The multilayer polyester container according to claim 1, wherein said intermediate layer has a thickness of 10 to 30% of the whole thickness of the container body wall.

6. The multilayer polyester container according to claim 1, wherein the multilayer polyester container is a pressure-resistant container obtained by the biaxial stretch-blow molding.

## Patentansprüche

1. Mehrschichtiger Polyesterbehälter, aufweisend eine mehrschichtige Struktur, umfassend innere und äußere Schichten eines Polyesterharzes und mindestens eine Zwischenschicht eines Barrierenharzes, wobei:
die Zwischenschicht ein Barrierenharz, ein Polyesterharz und einen Ton umfasst, wobei der Ton in dem Barrierenharz enthalten ist, und das Barrierenharz und das Polyesterharz in einem Gewichtsverhältnis von 2,5:7,5 bis 5:5 enthalten sind und die Zwischenschicht weiter eine See-Insel-Dispersionsstruktur bildet, in welcher eine Dispersionsphase des Ton-enthaltenden Barrierenharzes in einer kontinuierlichen Phase des Polyesterharzes gebildet ist.

2. Mehrschichtiger Polyesterbehälter nach Anspruch 1, wobei das Barrierenharz und das Polyesterharz in einem Gewichtsverhältnis von 3:7 bis 5:5 enthalten sind.

3. Mehrschichtiger Polyesterbehälter nach Anspruch 1, wobei die Behältergehäusewand eine Dicke von weniger als 0,36 mm aufweist.

4. Mehrschichtiger Polyesterbehälter nach Anspruch 1, wobei das Barrierenharz ein Polymetaxylylenadipamid (MXD6) ist.

5. Mehrschichtiger Polyesterbehälter nach Anspruch 1, wobei die Zwischenschicht eine Dicke von 10 bis 30% der Gesamtdicke der Behältergehäusewand aufweist.

6. Mehrschichtiger Polyesterbehälter nach Anspruch 1, wobei der mehrschichtige Polyesterbehälter ein druckfester Behälter, erhalten durch das biaxiale Streckblasformen, ist.

## Revendications

1. Un récipient en polyester multicouche présentant une structure multicouche comprenant des couches intérieure et extérieure d'une résine polyester et au moins une couche intermédiaire d'une résine barrière, où :
ladite couche intermédiaire comprend une résine barrière, une résine polyester et une argile, l'argile étant contenue dans la résine barrière, et ladite résine barrière et ladite résine polyester étant contenues dans un rapport en poids de 2,5:7,5 à 5:5, et ladite couche intermédiaire, de plus, constitue une dispersion en structure île-mère dans laquelle une phase de dispersion de la résine barrière contenant l'argile est formée dans la phase continue de la résine polyester.

2. Le récipient en polyester multicouche selon la revendication 1, dans lequel ladite résine barrière et ladite résine polyester sont contenues dans un rapport de 3:7 à 5 :5.

3. Le récipient en polyester multicouche selon la revendication 1, dans lequel la paroi du corps du récipient présente une épaisseur de moins de 0,36 mm.

4. Le récipient en polyester multicouche selon la revendication 1, dans lequel ladite résine barrière est un polymétaxylylèneadipamide (MXD6).

5. Le récipient en polyester multicouche selon la revendication 1, dans lequel ladite couche intermédiaire présente une épaisseur de 10 à 30 % de l'épaisseur entière de la paroi du corps du récipient.

6. Le récipient en polyester multicouche selon la revendication 1, dans lequel ledit récipient en polyester multicouche est un récipient résistant à la pression obtenu par moulage par étirage-soufflage biaxial.
